Europäisches Patentamt

European Patent Office

Office européen des brevets

(11) Veröffentlichungsnummer : **0 138 751**
**B1**

(12) **EUROPÄISCHE PATENTSCHRIFT**

(45) Veröffentlichungstag der Patentschrift :
12.11.86

(51) Int. Cl.⁴ : **C 09 C  1/20, C 08 K  3/24**

(21) Anmeldenummer : **84810388.3**

(22) Anmeldetag : **06.08.84**

(54) **Monokline Bleichromatpigmente.**

(30) Priorität : **12.08.83 CH 4417/83**
**12.01.84 CH 142/84**

(43) Veröffentlichungstag der Anmeldung :
**24.04.85 Patentblatt 85/17**

(45) Bekanntmachung des Hinweises auf die Patenterteilung : **12.11.86 Patentblatt 86/46**

(84) Benannte Vertragsstaaten :
**AT BE CH DE FR GB IT LI NL SE**

(56) Entgegenhaltungen :
**DE-A- 1 807 891**
**GB-A- 1 186 203**

(73) Patentinhaber : **CIBA-GEIGY AG**
**Klybeckstrasse 141**
**CH-4002 Basel (CH)**

(72) Erfinder : **Boekel, Cornelius Pieter, Dr.**
**Kroepanweg 1**
**NL-8141 RA Heino (NL)**
Erfinder : **Erkens, Leonardus Johannes Hubertus, Dr.**
**d'Artagnanlaan 24**
**NL-6213 CK Maastricht (NL)**
Erfinder : **Pugin, André, Dr.**
**La Dollaz**
**CH-1634 Pont-la-Ville (CH)**
Erfinder : **Snijders, Jacobus Michiel Hubertus**
**Boviersdaal 13**
**NL-6228 GP Maastricht (NL)**
Erfinder : **Geurts, Herman Joseph Johannes Maria**
**Alexandereik 9**
**NL-6465 AX Kerkrade (NL)**

0 138 751

**Beschreibung**

Die Erfindung betrifft monokline Bleichromatpigmente, die sich durch eine besondere grosse Feinheit der Pigmentteilchen und eine enge Teilchengrösseverteilung auszeichnen.

Bleichchromatpigmente werden seit vielen Jahren in grossem Umfang zum Färben von plastischen Materialien und Anstrichstoffen verwendet. Bevorzugt sind Pigmente, die aus kleinen Teilchen mit geringen Grössenunterschieden bestehen. Die US-PS 2 212 917 beschreibt Bleichromatpigmente, die sich zwar durch eine kleine durchschnittliche Teilchengrösse (beispielsweise 0,45 µm) auszeichnen, wobei einzelne Teilchen jedoch eine Länge von bis zu 3,5 µm aufweisen können. Die DE-OS 1 807 891 beschreibt beschichtete Bleichromatpigmente, wovon mindetens 50 % der Pigmentteilchen eine Korngrösse von höchstens 1,4 µm und 10 % weniger als 4,1 µm und mehr aufweisen. Auch diese Pigmente lassen bezüglich Feinheit der Teilchen und Gleichmässigkeit der Teilchengrösse noch viel zu wünschen übrig.

Gegenstand der vorliegenden Erfindung sind monokline Bleichromatpigmente enthaltend Bleichromat und Bleisulfat im Gew.-Verhältnis 100 : 0 bis 90 : 10, wobei die Pigmentteilchen einen Medianwert von 0,3-0,4 µm und 60-80 % aller Teilchen einen Stokes'schen Durchmesser von 0,15-0,5 µm aufweisen.

Bevorzugt sind monokline Bleichromatpigmente, worin die Pigmentteilchen einen Medianwert von 0,3-0,4 µm und 65-75 % aller Teilchen einen Stokes'schen Durchmesser von 0,15-0,5 µm aufweisen.

Der erfindungsgemässen Bleichromatpigmente erhält man, wenn man die wässrige Lösung eines Bleisalzes, beispielsweise Bleiacetat, insbesondere Bleinitrat, mit der wässrigen Lösung eines Chromates, insbesondere Natrium- oder Kaliumchromat und gegebenenfalls eines Sulfates, beispielsweise Natrium- oder Kaliumsulfat oder Ammoniumsulfat unter hoher Turbulenz vermischt. Die Chromatlösung wird vorteilhaft durch Zugabe von Alkali zu einer Bichromatlösung vor oder während der Umsetzung mit dem Bleisalz erzeugt.

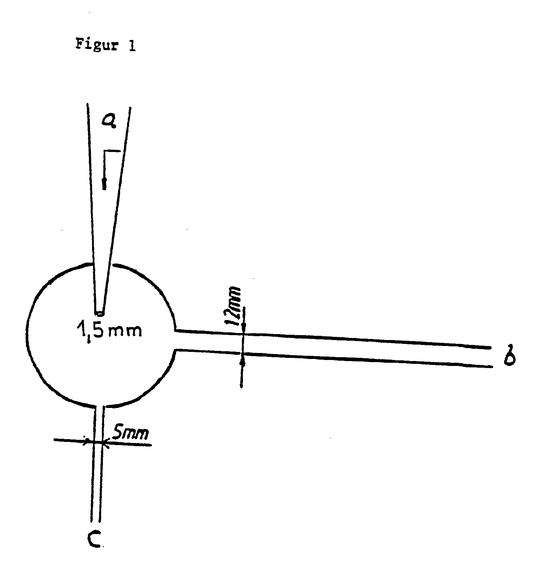

Die hohe Turbulenz kann auf verschiedene Art erreicht werden, beispielsweise durch kontinuierliche Vereinigung der zu vermischenden Lösungen in einer Mischdüse. Darunter ist eine Vorrichtung zu verstehen, bei welcher die zu vermischenden Lösungen auf verhältnismässig kleinem Raume miteinander vereinigt werden, wobei mindestens die eine Lösung, vorzugsweise unter erhöhtem Druck, durch eine Düse zugeführt wird. Die Mischdüse kann beispielsweise nach dem Prinzip der Wasserstrahlpumpe konstruiert sein, wobei die Zuführung der einen Flüssigkeit in der Mischdüse der Wasserzufuhr in der Wasserstrahlpumpe und die Zufuhr der anderen Flüssigkeit in der Mischdüse der Verbindung zu dem zu evakuierenden Gefäss in der Wasserstrahlpumpe entspricht und gegebenenfalls auch diese letztere Flüssigkeitszufuhr unter erhöhtem Druck erfolgt (siehe Fig. 1).

Zur Durchführung der Fällung in der Mischdüse wird zweckmässig die wässrige Lösung enthaltend das Chromat und gegebenenfalls ein Sulfat bei einer Strömungsgeschwindigkeit von mindestens 4.9 m/sec mit der wässrigen Lösung des Bleisalzes bei einer Strömungsgeschwindigkeit von mindestens 0,08 m/sec kontinuierlich, vorzugsweise bei Zimmertemperatur vereinigt. Die Fällung wird zweckmässig in Gegenwart eines Ueberschusses von 0,007-0,07, bevorzugt 0,007-0,017 Mol Chromat pro Liter über die stöchiometrische Menge und einem pH von 6-8 durchgeführt.

Eine andere Möglichkeit zur Erzeugung hoher Turbulenz bei der Vereinigung der Lösungen bieten im Handel erhältliche Hochleistungsrührer, wie z. B. der Ultra-Turrax der Fa. Janke und Kunkel KG, Staufen, BRD, der Ystral der Fa. Ystral GmbH, Ballrechten-Dottingen, BRD, der Polytron der Fa. Kinematica, Kriens-Luzern, CH, der Silverson-Rührer der Silverson Mach Ltd. Cheshem/UK oder der Chemcol-Mischer der Chemiecolor AG Kilchberg-Zürich, CH. Andere Typen von Hochleistungsrührern, die ebenfalls eingesetzt werden können, sind unter anderem der Pendraulik der Pendraulik Maschinen und Apparate GmbH, Bad Münder am Deister, BRD und Durchstrommischer wie z. B. jene der Firma Gronfa Process Technik BV/Rozendaal, NL. Dabei ist es wichtig, dass die Zugabe der Bleisalz- und der Chromatlösung und gegebenenfalls der Sulfatlösung in der unmittelbaren Nähe des Schaftes beim Rotor des Hochleistungsrührers erfolgt. Die Vermischung der beiden Hauptkomponenten in der turbulenten Zone kann sowohl durch gleichzeitige Zuführung als auch durch Vorlage der einen und Zudosierung der zweiten Komponente geschehen. Im ersten Fall wird zweckmässig einerseits eine Chromatlösung sowie gegebenenfalls zusätzlich eine Sulfatlösung und andererseits eine Bleisalzlösung durch zwei separate Leitungen in die unmittelbare Nähe des Schaftes beim Rotor geführt. Im zweiten Fall wird zum Beispiel die Chromatlösung sowie gegebenenfalls die Sulfatlösung vorgelegt und die Bleisalzlösung durch ein Rohr in unmittelbarer Nähe des Schaftes beim Rotor des Hochleistungsrührers zugegeben.

Das ausgefällte Pigment zeichnet sich durch eine extrem niedrige Teilchengrösse aus. Zur besseren Ausbildung der Kristallstrukturen erweist sich ein Altern, beispielsweise durch Stehenlassen bei Raumtemperatur oder durch Erwärmen, als vorteilhaft.

Das erhaltene Pigment kann behandelt werden mit texturverbessernden Mitteln, beispielsweise langkettigen aliphatischen Alkoholen, Estern, Säuren oder deren Salzen, Aminen, Amiden, Wachsen oder harzartigen Substanzen, wie Abietinsäure, deren Hydrierungsprodukten, Estern oder Salzen, ferner nichtionogenen, anionischen oder kationischen oberflächenaktiven Mitteln.

Zur Verbesserung der Stabilität gegen Wärme, Licht und chemische Angriffe ist es vorteilhaft, die Pigmentteilchen während der Fällung oder durch eine Nachbehandlung nach bekannten, beispielsweise in den US-PS 3 370 971, 3 639 133 und 4 046 588 beschriebenen Verfahren mit einem anorganischen Umhüllungsmittel zu überziehen.

Zu diesem Zweck wird auf dem Pigment eine anorganische Verbindung, beispielsweise eine Aluminium-, Silizium, Antimon-, Zinn-, Cer-, Titan- oder Zirkonverbindung oder deren Kombinationen ausgefällt. Als vorteilhaft erweist sich eine Cer-Aluminium-Silikatschicht, die z. B. durch Zugabe der wässrigen Lösung von Cernitrat, eines Alkalisilikates und von Aluminiumsulfat zur wässrigen Pigmentsuspension auf dem Pigment entsteht.

Die Menge des Umhüllungsmittels beträgt zweckmässig 2-40, vorzugsweise 2-20 und insbesondere 3-10 % bezogen auf das Gesamtgewicht des Pigmentes.

Die Aufarbeitung des Pigmentes erfolgt auf die übliche Weise, beispielsweise durch Abfiltrieren, Auswaschen des Filterkuchens mit Wasser zur Entfernung löslicher Salze, Trocknen und Pulverisieren.

Die Bestimmung des Medianwertes $\bar{D}_z$ (siehe DIN 53206 Blatt 1, August 1972, S. 6) und der Teilchengrössenverteilung kann nach bekannten Methoden erfolgen, z. B. mit einer Scheibenzentrifuge [siehe The Particle Size Determination of Pigments with the Disc Centrifuge, K. Brugger, Powder Technology 13 (1976), 215-221]. Auf besonders einfache Art lassen sich Medianwert und Teilchengrössenverteilung mit dem von der Firma Horiba, Kyoto, Japan in den Handel gebrachten Zentrifugal-Teilchengrössenverteilungs-Analysator (Modell CAPA-500) ermitteln, wobei man Stokes'sche Durchmesser (siehe DIN 53206) und Gewichtsverteilungen erhält. Die ermittelten Werte gelten auch für Pigmente, die bis zu 10 % Umhüllungsmaterial enthalten.

Die Farbstärke wurde bestimmt nach einem Programm auf der Basis von DIN 53235 und einem 8°/d Messwinkel.

Die elektronenmikroskopischen Aufnahmen der erhaltenen Pigmente zeigen deutlich die grossen Vorteile dieser Pigmente. Zwei charakteristische Hauptmerkmale ragen heraus. Die hergestellten Teilchen sind kleiner und besitzen eine grössere Gleichmässigkeit als die herkömmlichen Produkte. Die erhaltenen Pigmente zeichnen sich in der Applikation durch höhere Farbstärke, grünstichigere Nuance, gute Deckfähigkeit, gute rheologische Eigenschaften und höhere Sättigung aus. Auffallend ist weiterhin der geringere Anteil an in verdünnten Säuren löslichen Bleisalzen, wie Carbonat- und Sulfatsalzen, im Vergleich zu bekannten Produkten vom gleichen Farbton.

Bei Pigmente die mehr als 10 % Umhüllungsmaterial enthalten, können sich Medianwert und Teilchengrössenverteilung so stark verändern, dass sie nicht mehr in den oben definierten Bereich fallen. Auch solche Pigmente zeigen gegenüber den nach üblichen Methoden, beispielsweise gemäss US-PS 4 046 588, erhaltenen Pigmenten mit dem gleichen Anteil an Umhüllungsmaterial die erwähnten Vorteile in der Applikation wie höhere Farbstärke und Sättigung, einen grünstichigeren Farbton und bessere Deckfähigkeit.

Die erfindungsgemässen Pigmente können einzeln oder in Mischungen untereinander oder mit anderen Pigmenten, z. B. Phthalocyaninblau, Molybdatorange oder Berlinerblau zum Pigmentieren von hochmolekularem organischem Material verwendet werden, z. B. von Celluloseäthern und -estern, Acetylcellulose, Nitrocellulose, natürlichen Harzen oder Kunstharzen, wie Polymerisations- oder Kondensationsharze, z. B. Aminoplaste, insbesondere Harnstoff- und Melamin-Formaldehydharze, Alkydharze, Phenoplaste, Polycarbonate, Polyolefine, wie Polyäthylen oder Polypropylen, ferner Polystyrol, Polyvinylchlorid, Polyacrylnitril, Polyacrylsäureester, Gummi, Casein, Silicon und Silikonharze.

Die erwähnten hochmolekularen Verbindungen können sowohl als plastische Massen, Schmelzen oder in Form von Spinnlösungen, Lacken oder Druckfarben vorliegen. Je nach Verwendungszweck erweist es sich als vorteilhaft, die neuen Pigmente als Toner oder in Form von Präparaten zu verwenden.

In den nachfolgenden Beispielen und in der vorangehenden Beschreibung bedeuten die Teile, sofern nichts anderes angegeben, Gew.-Teile und die Prozente Gew.-Prozente. Die Medianwerte und die Teilchengrössenverteilung wurden mit dem CAPA-500 Analysator bei 3 000 Umdrehungen/Min. ermittelt. Die Menge Pigment muss so bemessen werden, dass die Absorption des Lichtstrahles zu Messbeginn zwischen 0,5 und 1,0 liegt. Die Pigmente werden wie folgt dispergiert :

15 mg Pigment werden mit 100 mg Teepol® HB6 (34 %ige Lösung des Na-Salzes eines sulfatierten primären Alkohols vom mittleren Molgewicht 267 der Fa. Shell) in einer Reibschale gut benetzt und in einem 250 ml Erlenmeyerkolben mit insgesamt 100 ml destilliertem Wasser versetzt. Dann wird dieser Kolben während 10 Minuten bei Raumtemperatur auf den Boden eines mit 1 l Wasser gefüllten Ultraschallbades (Bransonic 48 KHz der Firma Bransonic B.V., Soest, NL) gestellt.

## Beispiel 1

In einer Mischdüse (siehe Figur 1) bringt man bei Raumtemperatur und einer Strömungsgeschwindigkeit von 4,9 m/sec durch Rohr a eine wässrige Lösung enthaltend auf 1 000 Vol. Teile 49,25 Teile Natriumbichromat · $2H_2O$ und 13,5 Teile 100 %iges Natriumhydroxid und durch Rohr b bei einer Strömungsgeschwindigkeit von 0,08 m/sec eine wässrige Lösung enthaltend auf 1 000 Vol. Teile 96 Teile Bleinitrat gleichzeitig kontinuierlich zusammen. Die Zufuhr der Lösungen wird so geregelt, dass wähend der Fällung stets ein Ueberschuss an Natriumchromat von 0,016 8 Mol pro Liter über die stöchiometrische Menge vorhanden ist. Die entstandene Pigmentsuspension verlässt die Düse durch Rohr c. Nach der Fällung wird der pH durch Zugabe von Salpetersäure auf 5,5 eingestellt. Der

3

Niederschlag wird auf 80 °C erwärmt, abfiltriert, zur Entfernung löslicher Salze mit Wasser gewaschen und bei einer Temperatur von 80-90 °C getrocknet.

Das Pigment besteht zu 100 % aus Bleichromat.

Die mit dem CAPA-500 Analysator ermittelten Werte lauten : Medianwert : 0,37, Teilchengrössenverteilung : 69 % zwischen 0,15 und 0,5 μ.

Die relative Farbstärke im Vergleich zu einem nach einem herkömmlichen Verfahren erhaltenen Pigment gleicher Zusammensetzung wurde nach DIN 53235 ermittelt und beträgt 115 %.

#### Beispiel 2

In einer Mischdüse (siehe Figur 1) bringt man bei Raumtemperatur und einer Strömungsgeschwindigkeit von 4,9 m/sec durch Rohr a eine wässrige Lösung enthaltend auf 1 000 Vol. Teile 49,25 Teile Natriumbichromat · $2H_2O$ und 13,5 Teile 100 %iges Natriumhydroxid und durch Rohr b bei einer Strömungsgeschwindigkeit von 0,08 m/sec eine wässrige Lösung enthaltend auf 1 000 Vol. Teile 96 Teile Bleinitrat gleichzeitig kontinuierlich zusammen. Die Zufuhr der Lösungen wird so geregelt, dass wähend der Fällung stets ein Ueberschuss an Natriumchromat von 0,016 8 Mol $Na_2CrO_4$ pro Liter über die stöchiometrische Menge vorhanden ist. Die entstandene Pigmentsuspension verlässt die Düse durch Rohr c. Nach der Fällung wird der pH durch Zugabe von Salpetersäure auf 5,5 eingestellt. Der Niederschlag wird auf 80 °C erwärmt und während einer Stunde gerührt. Das überschüssige Natriumchromat oder -bichromat wird bei gleichbleibendem pH mit einem kleinen Ueberschuss an Bleinitrat ausgefällt.

Anschliessend gibt man zur Umhüllung der Pigmentteilchen zu der wässrigen Pigmentsuspension unter Rühren bei einer Temperatur von 60-70° eine Lösung von 11,2 Teilen Natrium-Silikat (28 % $SiO_2$) in 70 Teilen Wasser und anschliessend eine Lösung von 17,8 Teilen Aluminiumsulfat · $18H_2O$ und 11,8 Teilen 52 %iger $HNO_3$ in 100 Teilen Wasser. Danach werden 2,5 Teile Bleinitrat in 8 Teilen Wasser und 1 Teil Cerhydroxyd in 3,2 Teilen 52 %iger $HNO_3$ unter Rühren bei Raumtemperatur zugegeben. Der End-pH wird auf 5,0 eingestellt durch Zugabe von 13,3 Teilen Natriumcarbonat in 150 Teilen Wasser. Der Niederschlag wird abfiltriert, zur Entfernung löslicher Salze mit Wasser gewaschen und bei einer Temperatur von 80-90 °C getrocknet.

Verhältnis der Bleisalze : $PbCrO_4$  97,9 %
$PbSO_4$   2,1 %

Die mit dem CAPA-500 Analysator ermittelten Werten lauten :
Medianwert : 0,33 μm.
Teilchengrössenverteilung : 69,4 % zwischen 0,15 und 0,5 μm.
Die relative Farbstärke wurde nach DIN 53235 ermittelt und beträgt 145 %. Der Anteil der Umhüllung am Gesamtgewicht des Pigmentes beträgt 6 %.
Der Farbton gemessen nach DIN 53235 ist in Lacken deutlich grünstichig.

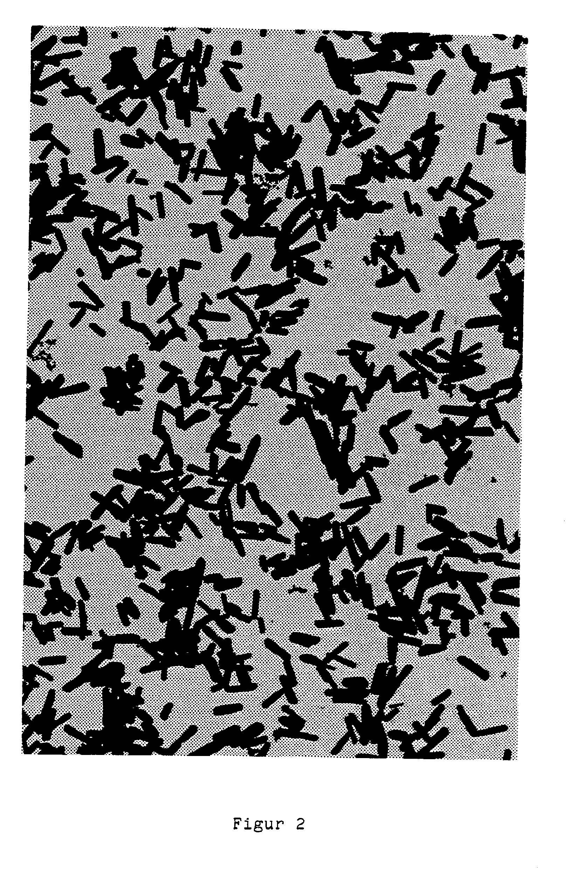

Figur 2 zeigt die Aufnahme im Elektronenmikroskop bei 20 000 facher Vergrösserung der in einem Alkohol-Wasser-Gemisch mit Ultraschall dispergierten Pigmentteilchen.

#### Beispiel 3

In einem Reaktionsgefäss mit Hochleistungsrührer (Durchmesser des Rotors 4 cm, Umfangsgeschwindigkeit des Rotors 4 m/sec.) bringt man eine wässrige Lösung enthaltend auf 1 000 Vol. Teile 49,25 Teile Natrimbichromat · $2H_2O$ und 13,5 Teile 100 %iges Natriumhydroxid, und eine wässrige Lösung enthaltend auf 1 000 Vol. Teile 96 Teile Bleinitrat gleichzeitig in getrennten Rohren und in unmittelbarer Nähe des Schaftes beim Rotor des Hochleistungsrührers kontinuierlich zusammen. Die Zufuhr der Lösungen wird so geregelt, dass während der Fällung stets ein Ueberschuss an Natriumchromat von 0,016 8 mol $Na_2CrO_4$ pro Liter über die stöchiometrische Menge vorhanden ist. Nach der Fällung wird der pH durch Zugabe von Salpetersäure auf 5,5 eingestellt. Der Niederschlag wird auf 80 °C erwärmt und während einer Stunde gerührt. Das überschüssige Natriumchromat oder -bichromat wird bei gleich bleibendem pH mit einem kleinen Ueberschuss an Bleinitrat gefällt. Anschliessend gibt man zur Umhüllung der Pigmentteilchen der wässrigen Suspension bei einer Temperatur von 60-70° unter Rühren eine Lösung von 11,2 Teilen Natrium-Silikat (28 % $SiO_2$) in 70 Teilen Wasser und anschliessend eine Lösung von 17,8 Teilen Aluminiumsulfat · $18H_2O$ und 11,8 Teilen 52 %iger $HNO_3$ in 100 Teilen Wasser zu. Danach werden zur Pigmentsuspension unter Rühren 2,5 Teile Bleinitrat in 8 Teilen Wasser und 1 Teil Cerhydroxid in 3,2 Teilen 52 %iger $HNO_3$ zugegeben. Der End-pH wird durch Zugabe von 13,3 Teilen Natriumcarbonat in 150 Teilen Wasser auf 5,0 gestellt.

Der Niederschlag wird abfiltriert, zur Entfernung löslicher Salze mit Wasser gewaschen, und bei einer Temperatur von 80-90 °C getrocknet.

Verhältnis der Bleisalze in Pigment : $PbCrO_4$  97,9 %
$PbSO_4$   2,1 %

4

0 138 751

Relative Farbstärke : 138 %.
Medianwert : 0,34 μm.
Teilchengrössenverteilung : 69 % zwischen 0,15 und 0,5 μm.
Anteil der Umhüllung am Gesamtgewicht des Pigments : 6 %.
Der Farbton gemessen nach DIN 53235 ist in Lacken deutlich grünstichig.

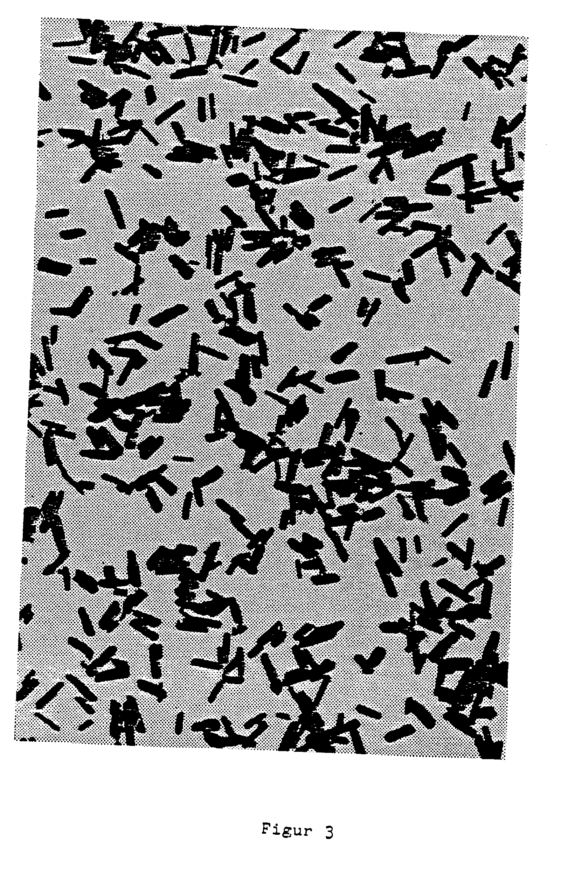

Fig. 3 zeigt eine Aufnahme der Pigmentteilchen im Elektronenmikroskop bei 20 000 facher Vergrösserung der in einem Alkohol-Wasser-Gemisch mit Ultraschall dispergierten Pigmentteilchen.


### Beispiel 4

In einer Mischdüse (siehe Figur 1) bringt man durch Rohr a bei einer Strömungsgeschwindigkeit von 4,9 m/sec eine wässrige Lösung enthaltend auf 1 000 Vol. Teile 49,25 Teile Natriumbichromat $\cdot$ 2H$_2$O und 13,5 Teile 100 %iges Natriumhydroxid und durch Rohr b eine wässrige Lösung enthaltend auf 1 000 Vol. Teile 96 Teile Bleinitrat gleichzeitig kontinuierlich zusammen. Die Zufuhr der Lösungen wird so geregelt, dass während der Fällung stets ein Ueberschuss an Na$_2$CrO$_4$ von 0,016 8 Mol pro Liter über die stöchiometrische Menge vorhanden ist. Nach der Fällung wird der pH durch Zugabe von Salpetersäure auf 5,5 eingestellt. Der Niederschlag wird auf 80 °C erwärmt und während einer Stunde gerührt. Das überschüssige Natriumchromat oder -bichromat wird bei gleichbleibendem pH mit einem kleinen Ueberschuss an Bleinitrat gefällt. Anschliessend gibt man zur Umhüllung der Pigmentteilchen unter Rühren bei einer Temperatur von 60-70 °C eine Lösung von 77 Teilen Natrium-Silikat (28 % SiO$_2$) in 200 Teilen Wasser und anschliessend eine Lösung von 17,8 Teilen Aluminiumsulfat $\cdot$ 18H$_2$O und 32 Teilen 52 %iger HNO$_3$ in 200 Teilen Wasser zur Pigmentsuspension. Danach wird eine Lösung von 2,5 Teilen Bleinitrat und 1 Teil Cerhydroxid in 3,2 Teilen 52 %iger HNO$_3$ unter Rühren zugegeben. Der End-pH wird auf 5,0 eingestellt durch Zugabe von 13,3 Teilen Natriumcarbonat in 150 Teilen Wasser. Der Niederschlag wird abfiltriert, der Filterkuchen zur Entfernung löslicher Salze mit Wasser gewaschen und bei einer Temperatur von 80-90 °C getrocknet.

Verhältnis der Bleisalze in Pigment : PbCrO$_4$  97,9 %
PbSO$_4$  2,1 %

Anteil der Umhüllung am Gesamtgewicht des Pigmentes : 18 %.
Die relative Farbstärke gegenüber einem auf herkömmliche Art erhaltenen Pigment gleicher Zusammensetzung beträgt 128 %.


### Beispiel 5

In einem 5 l-Reaktionsgefäss mit Hochleistungsrührer (Durchmesser des Rotors 4 cm, Umfangsgeschwindigkeit des Rotors 4 m/sec) legt man 1 000 ml einer wässrigen Lösung, enthaltend 49,25 g Natriumbichromat $\cdot$ 2H$_2$O, 5,4 Teile Natriumsulfat und 13,5 g 100 %iges Natriumhydroxid vor. Nun gibt man innerhalb von 2 Min. bei Raumtemperatur in unmittelbarer Nähe des Schaftes beim Rotor des Hochleistungsrührers mittels eines Glasrohres 1 000 ml einer wässrigen Lösung enthaltend 111 g Bleinitrat zu.
Nach der Fällung ist der Ueberschuss an Natriumchromat 0,016 8 Mol pro Liter. Nun wird der pH durch Zugabe von Salpetersäure auf 5,5 eingestellt. Der Niederschlag wird auf 80 °C erwärmt und während einer Stunde gerührt. Das überschüssige Natriumchromat oder -bichromat wird bei gleichbleibendem pH mit einem kleinen Ueberschuss an Bleinitrat gefällt.
Anschliessend gibt man zur Umhüllung der Pigmentteilchen bei einer Temperatur von 60-70 °C unter Rühren eine Lösung von 20 g Titanoxychlorid und 22,4 g Aluminiumsulfat $\cdot$ 18H$_2$O in 125 ml Wasser zu. Danach werden 2,2 g Cerhydroxid in 7,2 g 52 %iger HNO$_3$ zugegeben. Der End-pH wird durch Zugabe von 20 g Natriumcarbonat in 200 ml Wasser auf 5,0 eingestellt. Der Niederschlag wird abfiltriert, zur Entfernung löslicher Salze mit Wasser gewaschen und bei einer Temperatur von 80-90 °C getrocknet.

Verhältnis der Bleisalze in Pigment : PbCrO$_4$  92 %
PbSO$_4$  8 %

Die relative Farbstärke gegenüber einem auf herkömmliche Art erhaltenen Pigment beträgt 133 %.
Die mit dem CAPA-500 Analysator ermittelten Werte lauten : Medianwert : 0,4 μm.
Teilchengrössenverteilung : 72 % zwischen 0,15 und 0,5 μm.
Anteil der Umhüllung am Gesamtgewicht des Pigments : 9 %.
Der Farbton gemessen nach DIN 53235 ist in Lacken deutlich grünstichig.


### Beispiel 6

In einer 5 l-Reaktionsgefäss mit Hochleistungsrührer (Durchmesser des Rotors 4 cm, Umfangsgeschwindigkeit des Rotors 4 m/sec) legt man 1 000 ml einer wässrigen Lösung enthaltend 49,25 g

Natriumbichromat · 2H$_2$O und 13,5 g 100 %iges Natriumhydroxid vor. Nun gibt man in unmittelbarer Nähe des Schaftes beim Rotor des Hochleistungsrührers mittels eines Glasrohres innerhalb 2 Min. bei Raumtemperatur 1 000 ml einer wässrigen Lösung enthaltend 111 g Bleinitrat zu.

Nach der Fällung ist der Ueberschuss an Natriumchromat 0,016 8 mol pro Liter. Nun wird der pH durch Zugabe von Salpetersäure auf 5,5 eingestellt. Der Niederschlag wird auf 80 °C erwärmt und während einer Stunde gerührt. Das überschüssige Natriumchromat oder -bichromat wird bei gleichbleibendem pH mit einem kleinen Ueberschuss an Bleinitrat gefällt.

Anschliessend gibt man zur Umhüllung der Pigmentteilchen der wässrigen Suspension bei einer Temperatur von 70 °C unter Rühren eine Lösung von 13,6 g Natriumsilicat (28 % SiO$_2$) in 120 ml Wasser zu. Danach werden 4,2 g Antimontrioxid, 4,2 g Natriumfluorid und 11,3 g 52 %iger HNO$_3$ in 120 ml Wasser zugegeben. Der End-pH wird durch Zugabe von 20 g Natriumcarbonat in 200 ml Wasser auf 6,5 eingestellt. Der Niederschlag wird abfiltriert, zur Entfernung löslicher Salze mit Wasser gewaschen und bei einer Temperatur von 90 °C getrocknet.

Verhältnis der Bleisalze im Pigment : PbCrO$_4$  98 %
PbSO$_4$  2 %

Die relative Farbstärke gegenüber einem auf herkömmliche Art erhaltenen Pigment beträgt 131 %. Die mit dem CAPA-500 Analysator ermittelten Wert lauten : Medianwert : 0,37 μm.
Teilchengrössenverteilung : 72 % zwischen, 0,15 und 0,5 μm.
Anteil der Umhüllung am Gesamtgewicht des Pigmentes : 7,5 %.
Der Farbton gemessen nach DIN 53235 ist in Lacken deutlich grünstichig.

### Beispiel 7

0,6 Teile des gemäss Beispiel 2 erhaltenen umhüllten Pigments werden mit 76 Teilen Polyvinylchlorid, 33 Teilen Dioctylphthalat, 2 Teilen Dibutylzinndilaurat und 2 Teilen Titandioxyd zusammengemischt und auf dem Walzenstuhl während 15 Minuten bei 160 °C einer dünnen Folie verarbeitet. Die so erzeugte grünstichig gelbe Färbung ist farbstark, migrations- und lichtecht.

### Beispiel 8

0,05 Teile des gemäss Beispiel 2 erhaltenen umhüllten Pigments werden mit 100 Teilen Polystyrol trocken gemischt. Das Gemisch wird bei Temperaturen zwischen 180 und 220 °C geknetet, bis eine homogene Einfärbung entstanden ist. Man lässt die gefärbte Masse abkühlen und vermahlt sie in der Mühle zu einer Teilchengrösse von etwa 2 bis 4 mm. Das so erhältliche Granulat wird in einer Spritzgussmaschine bei Temperaturen zwischen 220 und 300 °C zu Formkörpern verarbeitet. Man erhält rotstichig gelb gefärbte Massen von guter Lichtechtheit und Temperaturstabilität.

### Beispiel 9

60 Teile einer 60 %igen Lösung eines nicht-trocknenden Alkydharzes in Xylol (Handelsname Beckosol® 27-320 der Firma Reichold-Albert-Chemie DE), 36 Teile einer 50 %igen Lösung eines Melamin-Formaldehyd-Harzed in einem Alkohol-Aromaten-Gemisch (Handelsname Super-Beckamin® 13-501 der Firma Reichold-Albert-Chemie), 2 Teile Xylol und 2 Teile Methylcellosolve werden vermischt und 100 Teile dieses Gemisches werden mit Hilfe eines Rührers zu einer homogenen Lacklösung verrührt. 95 Teile des so erhaltenen Klarlackes und 5 Teile des umhüllten Pigmentes gemäss Beispiel 2 werden in einer Kugelmühle während 72 Stunden gemahlen. Der eingefärbte Lack wird dann nach üblicher Spritzmethode auf ein Blech appliziert und 30 Minuten bei 120 °C eingebrannt. Man erhält eine gelbe Lackierung von guter Lichtechtheit.

**Patentansprüche**

1. Monokline Bleichromatpigmente enthaltend Bleichromat und Bleisulfat im Gew.-Verhältnis 100 : 0 bis 90 : 10, dadurch gekennzeichnet, dass die Pigmentteilchen einen Medianwert von 0,3-0,4 μm haben und 60-80 Gewichtsprozent aller Teilchen einen Stokes'schen Durchmesser von 0,15-0,5 μm aufweisen.

2. Bleichromatpigmente gemäss Anspruch 1, dadurch gekennzeichnet, dass die Pigmentteilchen einen Medianwert von 0,3-0,4 μm haben und 65-75 Gewichtsprozent aller Teilchen einen Stokes'schen Durchmesser von 0,15-0,5 μm aufweisen.

3. Bleichromatpigmente gemäss Anspruch 1 enthaltend zusätzlich texturverbessernde und/oder oberflächenaktive organische Mittel.

4. Bleichromatpigmente dadurch erhältlich, dass auf den Bleichromatpigmenten gemäss Anspruch 1 während der Fällung oder durch eine Nachbehandlung ein Ueberzug eines anorganischen Umhüllungsmittels erzeugt wird.

5. Bleichromatpigmente gamäss Anspruch 4, enthaltend 2-40 % eines anorganischen Umhüllungsmittels.

6. Bleichromatpigmente gemäss Anspruch 4, enthaltend 2-20 % eines anorganischen Umhüllungsmittels.

7. Bleichromatpigmente gemäss Anspruch 4, enthaltend 3-10 % eines anorganischen Umhüllungsmittels.

8. Verfahren zur Herstellung von monoklinen Bleichromatpigmenten gemäss Anspruch 1, dadurch gekennzeichnet, dass man die wässrige Lösung eines Bleisalzes mit der wässrigen Lösung eines Chromates oder eines Gemisches eines Chromates mit einem Sulfat unter hoher Turbulenz vermischt.

9. Verfahren gemäss Anspruch 8, dadurch gekennzeichnet, dass man die Turbulenz durch hohe Strömungsgeschwindigkeit oder mechanisches Rühren erzeugt.

10. Verfahren gemäss Anspruch 8, dadurch gekennzeichnet, dass während der Fällung ein Ueberschuss von 0,007-0,07 Mol Chromat pro Liter über die stöchiometrische Menge vorhanden ist.

11. Verfahren gemäss Anspruch 8, dadurch gekennzeichnet, dass man die erhaltenen Pigmente mit einer anorganischen Schutzhülle überzieht.

12. Hochmolekulares organisches Material enthaltend ein Bleichromatpigment gemäss Anspruch 1.

## Claims

1. A monoclinic lead chromate pigment containing lead chromate and lead sulfate in a weight ratio of 100 : 0 to 90 : 10, wherein the pigment particles have a median value of 0.3-0.4 $\mu$m and 60-80 % by weight of all the particles have a Stokes diameter of 0.15-0.5 $\mu$m.

2. A lead chromate pigment according to claim 1, wherein the pigment particles have a median value of 0.3-0.4 $\mu$m and 65-75 % by weight of all the particles have a Stokes diameter of 0.15-0.5 $\mu$m.

3. A lead chromate pigment according to claim 1, which additionally contains texture-improving and/or surface-active organic agents.

4. A lead chromate pigment obtainable by producing during the precipitation or in the course of an aftertreatment a coating of an inorganic coating agent on the lead chromate pigments according to claim 1.

5. A lead chromate pigment according to claim 4, which contain 2-40 % of an inorganic coating agent.

6. A lead chromate pigment according to claim 4, which contain 2-20 % of an inorganic coating agent.

7. A lead chromate pigment according to claim 4, which contains 3-10 % of an inorganic coating agent.

8. A process for preparing a monoclinic lead chromate pigment according to claim 1, which comprises mixing an aqueous solution of a lead salt with an aqueous solution of a chromate or of a mixture of a chromate with a sulfate under conditions of high turbulence.

9. A process according to claim 8, wherein the turbulence is created by high flow rates or mechanical stirring.

10. A process according to claim 8, wherein an excess of 0.007-0.07 mole of chromate per litre over the stoichiometric amount is present during the precipitation.

11. A process according to claim 8, wherein the resultant pigment is coated with an inorganic protective coating.

12. High molecular weight organic material which contains a lead chromate pigment according to claim 1.

## Revendications

1. Pigments à base de chromate de plomb monoclinique contenant du chromate de plomb et du sulfate de plomb selon un rapport pondéral allant de 100 : 0 à 90 : 10, caractérisés en ce que les particules de pigments ont une valeur médiane de 0,3 à 0,4 $\mu$m et en ce que 60 à 80 % en poids de toutes les particules présentent un diamètre, mesuré selon Stokes, de 0,15 à 0,5 $\mu$m.

2. Pigments à base de chromate de plomb selon la revendication 1, caractérisés en ce que les particules de pigments ont une valeur médiane de 0,3 à 0,4 $\mu$m et en ce que 65 à 75 % en poids de toutes les particules présentent un diamètre, mesuré selon Stokes, de 0,15 à 0,5 $\mu$m.

3. Pigments à base de chromate de plomb selon la revendication 1, contenant en outre des produits destinés à améliorer la structure et/ou des agents organiques tensio-actifs.

4. Pigments à base de chromate de plomb que l'on peut obtenir en produisant, sur des pigments à base de chromate de plomb selon la revendication 1, pendant la précipitation ou par un traitement ultérieur, un revêtement par un produit minéral d'enrobage.

5. Pigments à base de chromate de plomb selon la revendication 4, contenant 2 à 40 % d'un produit minéral d'enrobage.

6. Pigments à base de chromate de plomb selon la revendication 4, contenant 2 à 20 % d'un produit minéral d'enrobage.

7. Pigments à base de chromate de plomb selon la revendication 4, contenant 3 à 10 % d'un produit minéral d'enrobage.

8. Procédé pour produire des pigments à base de chromate de plomb monoclinique selon la revendication 1, caractérisé en ce qu'on mélange sous turbulence élevée la solution aqueuse d'un sel de plomb avec la solution aqueuse d'un chromate ou d'un mélange d'un chromate avec un sulfate.

9. Procédé selon la revendication 8, caractérisé en ce qu'on produit la turbulence par une vitesse élevée d'écoulement ou par agitation mécanique.

10. Procédé selon la revendication 8, caractérisé en ce qu'il y a, pendant la précipitation, présence d'un excès de 0,007 à 0,07 mole de chromate par litre par rapport à la quantité stœchiométrique.

11. Procédé selon la revendication 8, caractérisé en ce qu'on revêt d'une enveloppe minérale protectrice les pigments obtenus.

12. Matière organique à poids moléculaire élevé, contenant un pigment à base de chromate de plomb selon la revendication 1.

Figur 1

Figur 1

Figur 2

Figur 3